(19)

Europäisches
Patentamt
European
Patent Office
Office européen
des brevets

(11) **EP 2 323 013 B1**

(12) **EUROPEAN PATENT SPECIFICATION**

(45) Date of publication and mention
of the grant of the patent:
**27.08.2014 Bulletin 2014/35**

(51) Int Cl.:
***G01S 11/14*** *(2006.01)*   ***G06F 3/01*** *(2006.01)*
***G08C 17/00*** *(2006.01)*   ***G06F 3/038*** *(2013.01)*

(21) Application number: **10154768.5**

(22) Date of filing: **26.02.2010**

(54) **Wireless remote control system**

Drahtloses Fernbedienungssystem

Système de commande à distance sans fil

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.10.2009 TW 098134245**
**23.11.2009 TW 098139771**

(43) Date of publication of application:
**18.05.2011 Bulletin 2011/20**

(73) Proprietor: **Acer Incorporated
Taipei County (TW)**

(72) Inventor: **Chiueh, Tzi-Dar
111, Taipei City (TW)**

(74) Representative: **Von Kreisler Selting Werner -
Partnerschaft
von Patentanwälten und Rechtsanwälten mbB
Deichmannhaus am Dom
Bahnhofsvorplatz 1
50667 Köln (DE)**

(56) References cited:
**GB-A- 2 388 749     GB-A- 2 408 337
US-A1- 2007 115 252**

Description

BACKGROUND OF THE INVENTION

1. Field of the invention

The present invention relates to remote control systems. In particular, the present invention relates to wireless remote control systems that determines control signals based on users' gestures.

2. Description of the prior art

Wireless control of electrical/electronic devices is becoming indispensable. For instance, garage door opening, audio/video equipment (TV) control, air conditioner control, projector control, wireless mouse, and so on. Wireless controllers provide the convenience that saves users from walking to the devices that they want to control. Most commercial wireless controllers at the present time are based on radio-frequency (RF) or infrared signals to communicate the intended commands to the controlled devices.

Practically, besides RF and infrared signals, ultrasonic signals can also be used for remote wireless control purpose. U.S. patent 4,578,674 discloses a wireless cursor control using a position device (mouse). In this patent, two detectors disposed at the computer side detect how a wireless mouse moves based the ultrasonic signal emitted by the mouse; a cursor on a display panel is accordingly controlled.

Because of the Doppler effect, the frequencies detected by the two detectors (represented as $f_1$ and $f_2$) at the computer side are different from the original frequency of the ultrasonic signal emitted by the mouse (represented as $f_0$). The microprocessor at the computer side first calculates the difference between $f_1$ and $f_0$ and the difference between $f_2$ and $f_0$. According to the two differences, the microprocessor estimates the direction and velocity of the mouse motion relative to the detectors. Then the patent calculates the movement of the position device from an initial location and moves the cursor on the display accordingly.

The disadvantage of the above idea is that the calculation is highly related to the reference frequency of the ultrasonic signal emitted by the mouse ($f_0$). More specifically, the calculation cannot be done without knowing the value of $f_0$. Hence, in U.S. patent 4,578,674, an infrared emitter for providing a reference signal is set at the computer side. Correspondingly, an infrared receiver for receiving the reference signal is set on the position device (mouse). A continuous-wave signal with the exact frequency $f_0$ is carried on an infrared signal through modulation. At the position device, an infrared receiver and a demodulator can recover that signal for generation of the ultrasonic signal with frequency $f_0$. In other words, through this reference signal, the computer side controls the frequency of the ultrasonic signal emitted by the mouse ($f_0$). However, including an infrared receiver at the remote control device increases both its size and power consumption, rendering such control mechanism undesirable.

U.S. patent 4,654,648 also utilizes acoustic signal emitted from the controller and measure the time difference between signals arriving at several different acoustic receivers. Using triangulation, the patent can determine the position of the controller. This patent does not teach a wireless remote control based on Doppler effect induced from the motion of the controller.

U.S. patent 5,999,167 teaches another wireless cursor control system based on ultrasonic signal. The ultrasonic signal is emitted from the base unit and the remote controller is equipped with multiple ultrasonic receivers. The phases of the received ultrasonic signals are captured and compared to determine the angular orientation of the remote unit and therefore cursor movement on the display can be accordingly controlled according to said detected orientation change.

It furthermore discloses a remote controller emitting ultrasonic waves and a plurality of ultrasonic sensors for sensing simultaneously the emitted signal to control a mouse cursor on a monitor.

U.S. patent application US2007/0115252 is based on US patent 5,999,167 and includes an extra sensitivity adjuster to extend the application of US patent 5,999,167 to the cases when the remote controller is at a far distance away from the base unit.

GB 2 408 337 A presents a graphic input device, comprising a pen-shaped pointing device, which can be moved about a writing surface. Ultrasonic waves are used for the measurement of the displacement of the pointing device, whereby the pointing device emits ultrasonic waves which are detected by static receivers. The difference between the emitted signal and the signal detected by the receivers is used to calculate the pointing device's displacement relative to the receivers.

GB 2 388 749 discloses a mobile phone receiving signals from a base station and neighbouring cells to calculate the motion of the handset. It discloses using a frequency difference between the received signals to avoid calculation errors as the handset is already locked to the doppler shifted signal from the base station.

U.S. patent 6,504,526 presents a wireless pointing device based on infrared signal. Multiple receivers receive infrared pulse-train signal from a transmitter. As the remote unit is moved, wavefront will arrive at different receivers at different times. By detecting the peaks in the received signal's amplitude (or envelope) and compare their arrival times, movement along a particular direction of the remote control unit can be detected.

In summary most prior arts use either IR or RF signals for remote control or cursor control. Of those that use ultrasonic signal, most detect the arrival times of the signal or the phases of the signals. Only U.S. patent 4,578,674 detects the frequencies of the received ultrasonic signals. However, in order to calculate the absolute frequency difference, and thus absolute velocity of the transmitter, U.S. patent 4,578,674 sends a reference signal with frequency $f_0$ to the remote controller. This requires an extra pair of infrared transmitter and receiver, which necessitates more cost and power consumption.

## SUMMARY OF THE INVENTION

The wireless remote control system according to the Invention also operates based on the concept of the Doppler effect induced by the movement of a remote controller, which emits a wireless signal consisting of tone(s) of one frequency or a group of several frequencies. However, the host side in the invention does not have to know the exact frequency of the wireless signal emitted by said remote controller. Accordingly, the infrared emitter and infrared receiver in U.S. patent 4,578,674 can be omitted.

The invention is specified in the independent claim 1.

The wireless remote controller according to the invention has many advantages, such as small size, low cost, low power consumption, and easy to use. Further, the wireless remote control system can be widely used in various fields that need wireless remote control. The advantage of the invention may be understood by the following recitations together with the appended drawings.

## BRIEF DESCRIPTION OF THE APPENDED DRAWINGS

   FIG. 1 illustrates the wireless remote control system in the first embodiment according to the invention.

   FIG. 2(A) and FIG. 2(B) show examples of the movement patterns of the remote controller relative to the detectors.

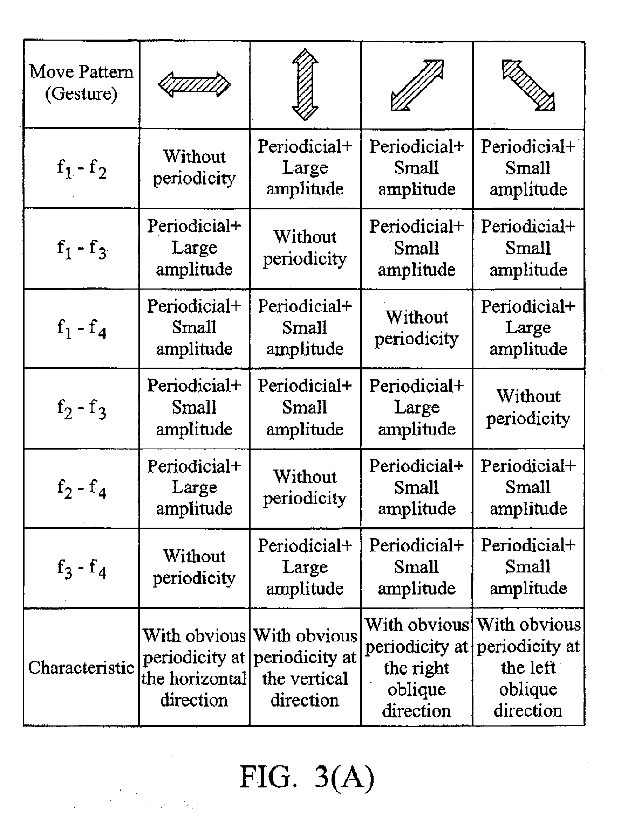

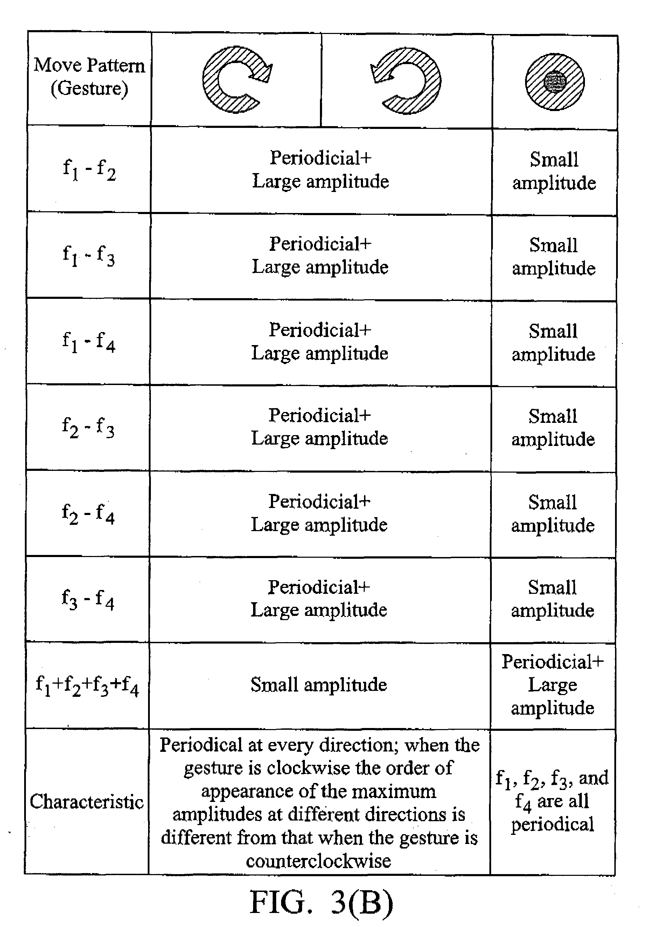

The tables in FIG. 3(A) and FIG. 3(B) illustrate the characteristics of the frequency differences under different movement patterns.

## DETAILED DESCRIPTION OF THE INVENTION

Frequency shift induced by the Doppler effect of a wireless signal is the basis for detecting the movement pattern made by a remote controller in the wireless remote control system according to the invention. As known by those skilled in the art, when there is a relative movement between a signal source and an observer, the relationship between the detected frequency of the signal (f) and the original frequency ($f_0$) at the transmitting end is:

$$f = \frac{v + v_r}{v + v_s} f_0 = \frac{1 + \dfrac{v_r}{v}}{1 + \dfrac{v_s}{v}} f_0 \ ,$$

In this equation, $v$ represents the speed of the signal, $v_s$ represents the moving velocity of the signal source along the direction from the observer to the source, and $v_r$ represents the velocity of the observer along said direction. If both the location of the observer and the frequency of the emitted signal source are fixed, then $f_0$ and $v_r$ are constants. If the signal source is a remote controller hold by a user, $v_s$ is related to the motion of the user's hand. Generally, the speed of movement by human hands is roughly in the range of 1m/s ~ 3m/s, which is much lower than the speed of sound waves. Therefore, in the case of ultrasonic signal the above equation can be modified as:

$$f \propto \frac{1}{1 + \dfrac{v_s}{v}} = 1 - \frac{v_s}{v} + (\frac{v_s}{v})^2 - (\frac{v_s}{v})^3 + \dots \approx 1 - \frac{v_s}{v}$$

As shown in this equation, the observed frequency (f) and the velocity of the sound source along a direction ($v_s$) are approximately linearly related. Based on this relationship, the wireless remote control system according to the invention can continuously estimate and monitor the velocity of a remote controller and thus determine its movement pattern.

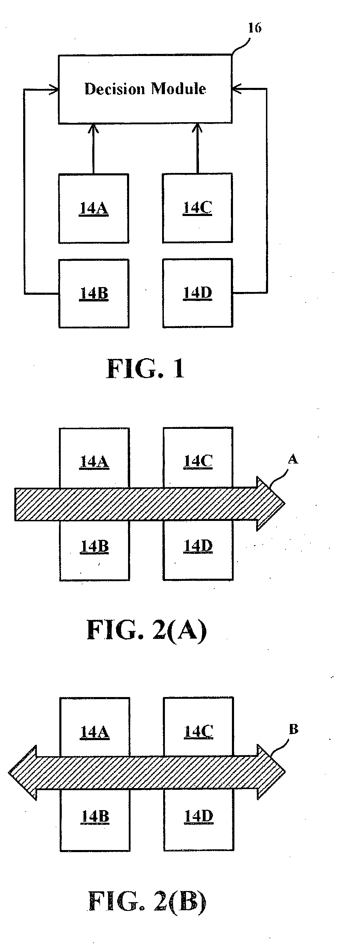

FIG. 1 illustrates the wireless remote control system in the first embodiment according to the invention. The system in this embodiment includes a remote controller (not shown), four detectors (14A~14D) arranged substantially as a rectangle on a plane, and a decision module 16. The remote controller is used for emitting a wireless signal. According to the invention, the wireless signal can be an ultrasonic signal. In actual applications, the four detectors can also be arranged substantially as a rhombus.

The detectors 14A ~ 14D detect the wireless signal emitted by the remote controller and respectively generate a detecting result. Since the positions of the detectors 14A ~ 14D relative to the remote controller are different, the detectors 14A ~ 14D generate different detecting results when the remote controller moves. Taking the detector 14A as an example, when the remote controller is moving toward the detector 14A, the frequency detected by the detector 14A ($f_1$) is higher than the frequency of the wireless signal emitted by the remote controller ($f_0$), which is unknown to the decision module. When the remote controller is moving away from the detector 14A, $f_1$ is lower than $f_0$. Similarly, when the remote controller is moving toward the detector 14B, the frequency detected by the detector 14B ($f_2$) is higher than $f_0$. When the remote controller is moving away from the detector 14B, $f_2$ is lower than $f_0$.

Based on the relative relationship of the frequencies, the decision module 16 can determine the movement pattern of the remote controller (i.e., the gesture of the user) by calculating the differences between the detected frequencies. For instance, if the remote controller moves along the arrow A shown in FIG. 2(A), when the remote controller is moving away from the detector 14A but close to the detector 14C, the frequency detected by the detector 14A ($f_1$) is lower than $f_0$, and the frequency detected by the detector 14C ($f_3$) is higher than $f_0$. During this period, the result of subtracting $f_3$ from $f_1$ is negative. On the contrary, if the remote controller moves along the direction opposite to the arrow A, when the remote controller is moving away from the detector 14C but close to the detector 14A, $f_1$ is higher than $f_0$, and $f_3$ is lower than $f_0$. In this period, the result of subtracting $f_3$ from $f_1$ is positive.

It can be seen that if the wireless remote control system includes two detectors spaced apart along a specific direction, the decision module 16 can determine if the remote controller moves along the specific direction or along a reverse direction opposite to the specific direction based on the frequency difference between the detecting results of the two detectors.

Further, when the remote controller moves repeatedly along the arrow B shown in FIG. 2(B), the frequency difference between the detectors 14A and 14C is periodical and alternatively changes between positive and negative values. Similarly, under this condition, the frequency difference between the detectors 14B and 14D is also periodic. According to these results, the decision module 16 can judge that the user moves the remote controller along the horizontal direction shown as the arrow B.

As described above, the decision module 16 judges the movement pattern of the remote controller based on at least one frequency difference between the detecting results. In other words, the decision module 16 according to the invention can calculate the frequency differences between the detecting results without the knowledge of $f_0$. Therefore, the infrared transmitter and infrared receiver for synchronizing $f_0$ in prior arts are unnecessary in the wireless remote control system according to the invention.

The tables shown in FIG. 3(A) and FIG. 3(B) further illustrate the characteristics of the frequency differences or sum under the conditions when the remote controller moves horizontally, vertically, obliquely (including from-right-to-left and from-left-to-right), circularly (including clockwise and counterclockwise), or back and forth. The symbols $f_1 \sim f_4$ respectively represent the frequency detected at the detectors 14A ~ 14D. Based on the change patterns of the frequency differences in time domain, the decision module 16 can judge the movement pattern of the remote controller in the space. Practically, the decision module 16 can judge the movement pattern of the remote controller based on whether the frequency differences are periodical signals or combinations of plural periodical signals.

After determining the movement pattern of the remote controller, the decision module 16 can optionally generate a control signal transfer the control signal to a subsequent electronic or mechanical system. Corresponding to different movement patterns, the decision module 16 can generate different control signals. For instance, the control signal can be used to turn on/off a television, adjust the volume of the television, select the channel of the television, or adjust the temperature of an air conditioner.

As shown in the examples mentioned in FIG. 3(A) and FIG. 3(B), users can give various commands by moving the remote controller with simple gestures. In actual applications, the remote controller can be as simple as including only one battery and an oscillating circuit for generating the wireless signal. Therefore, both the cost and power consumption of the remote controller are considerably low. Moreover, the size of the remote controller is quite small and can be integrated in an ornament, such as a ring, or personal belongings (for instance, a mobile phone, a watch, or a pen).

Practically, the detectors 14A ~ 14D can include frequency detection circuits for determining the frequency of the wireless signal based on the number of voltage transitions of the wireless signal. The decision module 16 can include a circuit or software for analyzing the spectrum of the frequency differences between two detectors. In this spectrum if the value at some frequency is above a certain threshold, the decision module 16 can decide that the remote controller has some obvious periodic movement along the direction of those two detectors. Moreover, the number of detectors in wireless remote control systems according to the invention can be different from that in this embodiment. For instance, using one, two, three, six, eight, or more detectors is also possible. Furthermore, if there is a need for more than seven commands in FIG. 3, a combination of two or more movement patterns can be applied in sequence to make up more commands, for instance, clockwise circular motion followed by top-down motion.

In practical applications, the decision module 16 can determine the movement pattern only when at least one detecting result among the detecting results conforms to a predetermined frequency limitation. By excluding signals with frequencies lower than a lowest limit, low frequency noises can be filtered out; this can also be a limitation for judging whether the wireless signal emitted by the remote controller exists. By excluding signals with frequencies higher than an upper limit, high frequency noises can be filtered out from the detected signals. In other words, the decision module 16 can be designed as only operating for stable wireless signals in a particular frequency band.

Furthermore, as described above, the frequencies respectively detected by the detectors 14A ~ 14D are linearly related to the velocities along corresponding directions of the remote controller. Accordingly, the frequency difference between two detecting results is also directly proportional to the velocity difference between the moving velocities of the remote controller respectively relative to the two detectors. If the wireless remote control system according to the invention includes two detectors disposed along a specific direction, the decision module 16 can estimate the velocity of the remote controller along the specific direction based on the frequency difference between the detector outputs.

Since the decision module 16 can estimate the velocity and moving direction of the remote controller according to the detecting results of the detectors 14A ~ 14D, the decision module 16 can further integrate the moving velocity in time domain, so as to determine and record a trajectory of the remote controller in the space. By doing this, the manager/designer of the wireless remote control system according to the invention can further define more commands corresponding to more complicated gestures. For example, can input icons, symbols, numbers, letters in alphabets, or Chinese characters via the remote controller.

In practical applications, if there is a need of distinguishing plural users or plural apparatuses to be controlled, a multiple access modulation can be performed on the wireless signal before the wireless signal is emitted from the remote controller. The multiple access modulation, for example, can be a time division multiple access (TDMA) modulation, a code division multiple access (CDMA) modulation, or a frequency division multiple access (FDMA) modulation. Thereby, identification information can be added into the wireless signal.

Correspondingly, the decision module 16 can include a demodulating unit for demodulating the wireless signal and determining identification information of the remote controller. For instance, the designer or manager of the wireless remote control system can define ten frequencies (e.g. 36 KHz, 37 KHz, 38 KHz ..., and 45 KHz); every remote controller can select three frequencies therefrom and emit signals of the three frequencies. There would be about 1,200 frequency combinations. According to the frequency components of a wireless signal, the decision module 16 can also distinguish different remote controllers. With this arrangement, the identification of the user can be determined by the decision module. This user identification information can facilitate further control of the user commands, e.g., young children are not allowed to enter commands that will lead them to viewing of improper content.

The idea of the invention can also be applied in the condition with only one detector. Another embodiment according to the invention is a wireless remote control system including a remote controller, a detector, and a decision module. Based on at least one frequency difference between the detecting results detected at different times, the decision module in this embodiment determines the movement pattern of the remote controller and generates a control signal according to the movement pattern.

Taking the condition when the detector is set on a certain wall as an example, when the remote controller has a moving vector along the direction perpendicular to and toward the wall (corresponding to the gesture in the right column in FIG. 3(B)), the detector detects a higher frequency. Assuming the detecting result detected at a first time instant is a first frequency and the detecting result detected at a second time instant is a second frequency, the decision module can determine if the remote controller moves back and forth along the direction perpendicular to the wall based on the frequency difference between the first frequency and the second frequency.

Another embodiment according to the invention is also a wireless remote control system including a remote controller, a detector, and a decision module. The detector in this embodiment is used for detecting the frequency of the wireless signal emitted by the remote controller. The decision module generates a control signal according to a time pattern of the frequency, which is related to the movement pattern of the remote controller. As explained above, a forward-backward motion of the remote controller is corresponding to a high-low time pattern of the detected frequency. For instance, three periods of forward-backward motion is deemed a long "dash" and one period of forward-backward motion is deemed a short "dot." This Morse-code-like combination can constitute several different commands recognized by the decision module using only one detector. It should be noted that the decision module in this embodiment does not have to know the frequency of the wireless signal emitted by the remote controller ($f_0$), either.

As described above, the wireless remote controller according to the invention has many advantages, such as small size, low cost, low power consumption, and easy to use. Further, the wireless remote control system according to the invention can be widely used in various fields that need wireless remote control.

Compared with most remote control systems utilizing infrared or RF signals at the present time, the detecting circuit in the invention has lower operation frequencies. Hence, not only the remote controller but also the detecting circuit according to the invention has the advantages of low cost and low power consumption.

With the example and explanations above, the features of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims,

**Claims**

1. A wireless remote control system, comprising :

   a remote controller for emitting a wireless signal;
   a plurality of detectors (14A~14D) for detecting simultaneously the frequency of the wireless signal and respectively generating a detecting result according to the detected frequency of the wireless signal; and
   a decision module (16) electrically connected to the detectors (14A~14D),
   the decision module (16) determining a movement pattern of the remote controller and generating a control signal according to the movement pattern **characterized by**
   determining the movement pattern based on at least one frequency difference between two of the simultaneously detected frequencies of the detecting results.

2. The wireless remote control system of claim 1, wherein the wireless signal is an ultrasonic signal.

3. The wireless remote control system of claim 1, wherein the plural detectors (14A~14D) comprise a first detector and a second detector disposed along a specific direction, the detecting result of the first detector is a first frequency, the detecting result of the second detector is a second frequency, based on the frequency difference between the first frequency and the second frequency, the decision module (16) determines if the remote controller moves along the specific direction or along a reverse direction opposite to the specific direction or determines a moving speed thereof, wherein the frequency difference of subtracting the first frequency from the second frequency is negative when the remote controller moves away from the first detector but close to the second detector, and the frequency difference of subtracting the first frequency from the second frequency is positive when the remote controller moves away from the second detector but close to the first detector.

4. The wireless remote control system of claim 1, wherein the decision module (16) determines the movement pattern of the remote controller based on a change pattern of the frequency difference between two of the frequencies detected over time.

5. The wireless remote control system of claim 4, wherein the decision module (16) determines the movement pattern of the remote controller based on whether the frequency difference follows a periodical pattern or a combination of plural periodical patterns.

6. The wireless remote control system of claim 1, wherein corresponding to conditions that the remote controller moves horizontally, vertically, obliquely, circularly, or back and forth, the control signal is different.

7. The wireless remote control system of claim 1, wherein the decision module (16) further determines and records a movement trajectory of the remote controller based on the frequency difference.

8. The wireless remote control system of claim 7, wherein the decision module (16) determines a moving velocity and a moving direction of the remote controller based on the frequency difference and determines the movement trajectory according to the moving velocity and the moving direction.

9. The wireless remote control system of claim 1, wherein a multiple access modulation is performed on the wireless signal before the wireless signal is emitted from the remote controller; the decision module (16) comprises a demodulating unit for demodulating the wireless signal and determines identification information of the remote controller.

10. The wireless remote control system of claim 9, wherein the multiple access modulation is a time division multiple access (TDMA) modulation, a code division multiple access (CDMA) modulation, or a frequency division multiple access (FDMA) modulation.

11. The wireless remote control system of claim 1, wherein only when at least one detecting result among the detecting results conforms to a predetermined frequency limitation, the decision module (16) determines the movement pattern based on the at least one frequency difference.

12. The wireless remote control system of claim 1, wherein the remote controller comprises a battery and an oscillating circuit for generating the wireless signal.

13. The wireless remote control system of claim 1, wherein each of the detectors (14A~14D) respectively comprises a frequency deciding circuit for determining a frequency of the wireless signal based on the number of transitions of the wireless signal.

**Patentansprüche**

1. Funkfernsteuerungssystem mit:

einer Fernsteuerung zum Senden eines Funksignals;
mehreren Detektoren (14A~14D) zum gleichzeitigen Erkennen der Frequenz des Funksignals und zum jeweiligen Erzeugen eines Erkennungsergebnisses entsprechend der erkannten Frequenz des Funksignals; und
einem Entscheidungsmodul (16), das elektrisch mit den Detektoren (14A~14D) verbunden ist,
wobei das Entscheidungsmodul (16) ein Bewegungsmuster der Fernsteuerung bestimmt und ein Steuersignal entsprechend dem Bewegungsmuster erzeugt,
**gekennzeichnet durch** das Bestimmen des Bewegungsmusters auf der Basis mindestens einer Frequenzdifferenz zwischen zwei gleichzeitig erkannten Frequenzen der Erkennungsergebnisse.

2. Fernsteuerungssystem nach Anspruch 1, bei welchem das Funksignal ein Ultraschallsignal ist.

3. Fernsteuerungssystem nach Anspruch 1, bei welchem die mehreren Detektoren (14A~14D) einen ersten Detektor und einen zweiten Detektor aufweisen, die entlang einer spezifischen Richtung angeordnet sind, wobei das Erkennungsergebnis des ersten Detektors eine erste Frequenz ist, wobei das Erkennungsergebnis des zweiten Detektors eine zweite Frequenz ist, wobei das Entscheidungsmodul (16) basierend auf der Frequenzdifferenz zwischen der ersten Frequenz und der zweiten Frequenz bestimmt, ob sich die Fernsteuerung entlang der spezifischen Richtung oder entlang einer der spezifischen Richtung entgegengesetzten, umgekehrten Richtung bewegt, oder die Bewegungsgeschwindigkeit derselben bestimmt, wobei die Frequenzdifferenz aus der Subtraktion der ersten Frequenz von der zweiten Frequenz negativ ist, wenn die Fernsteuerung sich von dem ersten Detektor weg, jedoch in die Nähe des zweiten Detektors bewegt, und die Frequenzdifferenz aus der Subtraktion der ersten Frequenz von der zweiten Frequenz positiv ist, wenn die Fernsteuerung sich von dem zweiten Detektor weg, jedoch in die Nähe des ersten Detektors bewegt.

4. Funkfernsteuerungssystem nach Anspruch 1, bei welchem das Entscheidungsmodul (16) das Bewegungsmuster der Fernsteuerung basierend auf einem Änderungsmuster der Frequenzdifferenz zwischen zwei der über die Zeit erkannten Frequenzen bestimmt.

5. Funkfernsteuerungssystem nach Anspruch 4, bei welchem das Entscheidungsmodul (16) das Bewegungsmuster der Fernsteuerung basierend darauf bestimmt, ob die Frequenzdifferenz einem periodischen Muster oder einer Kombination mehrerer periodischer Muster folgt.

6. Funkfernsteuerungssystem nach Anspruch 1, bei welchem das Steuersignal verschieden ist, je nachdem, ob sich die Fernsteuerung horizontal, vertikal, schräg, im Kreis oder vor und zurück bewegt.

7. Funkfernsteuerungssystem nach Anspruch 1, bei welchem das Entscheidungsmodul (16) ferner eine Bewegungsbahn der Fernsteuerung basierend auf der Frequenzdifferenz bestimmt und aufzeichnet.

8. Funkfernsteuerungssystem nach Anspruch 7, bei welchem das Entscheidungsmodul (16) die Bewegungsgeschwindigkeit und die Bewegungsrichtung der Fernsteuerung basierend auf der Frequenzdifferenz bestimmt und die Bewegungsbahn entsprechend der Bewegungsgeschwindigkeit und der Bewegungsrichtung bestimmt.

9. Funkfernsteuerungssystem nach Anspruch 1, bei welchem eine Mehrfachzugriffsmodulation an dem Funksignal durchgeführt wird, bevor das Funksignal aus der Fernsteuerung gesendet wird; wobei das Entscheidungsmodul (16) eine Demodulationseinheit zum Demodulieren des Funksignals aufweist und Identifizierungsinformationen der Fernsteuerung bestimmt.

10. Funkfernsteuerungssystem nach Anspruch 9, bei welchem die Mehrfachzugangsmodulation eine Time-Divisional-Multiple-Access-Modulation (TDMA), eine Code-Divisional-Multiple-Access-Modulation (CDMA) oder eine Frequenzvielfachzugriffsmodulation (FDMA) ist.

11. Funkfernsteuerungssystem nach Anspruch 1, bei welchem das Entscheidungsmodul (16) nur, wenn mindestens ein Erkennungsergebnis unter den Erkennungsergebnissen einer vorbestimmten Frequenzbegrenzung entspricht, das Bewegungsmuster basierend auf der mindestens einen Frequenzdifferenz bestimmt.

12. Funkfernsteuerungssystem nach Anspruch 1, bei welchem die Fernsteuerung eine Batterie und eine Schwingschaltung zum Erzeugen des Funksignals aufweist.

13. Funkfernsteuerungssystem nach Anspruch 1, bei welchem jeder der Detektoren (14A~14D) jeweils eine Frequenzentscheidungsschaltung aufweist, um basierend auf der Anzahl der Übergänge des Funksignals die Frequenz des Funksignals zu bestimmen.

## Revendications

1. Système de commande à distance sans fil, comprenant :

   une télécommande pour émettre un signal radioélectrique ;
   une pluralité de détecteurs (14A-14D) pour détecter simultanément la fréquence du signal radioélectrique et, respectivement, générer un résultat de détection selon la fréquence détectée du signal radioélectrique ; et
   un module de décision (16) connecté électriquement aux détecteurs (14A~14D),
   le module de décision (16) déterminant un modèle de mouvement de la télécommande et générant un signal de commande selon le modèle de mouvement,
   **caractérisé par**
   la détermination du modèle de mouvement basé sur au moins une différence de fréquences entre deux des fréquences simultanément détectées des résultats de détection.

2. Système de commande à distance sans fil selon la revendication 1, dans lequel le signal radioélectrique est un signal ultrasonore.

3. Système de commande à distance sans fil selon la revendication 1, dans lequel la pluralité de détecteurs (14A~14D) comprend un premier détecteur et un deuxième détecteur disposés le long d'une direction spécifique, le résultat de détection du premier détecteur est une première fréquence, le résultat de détection du deuxième détecteur est une deuxième fréquence, lesdits résultats de détection étant basés sur la différence de fréquences entre la première fréquence et la deuxième fréquence, le module de décision (16) détermine si la télécommande se déplace le long de la direction spécifique ou le long d'une direction inverse opposée à la direction spécifique, ou bien détermine une vitesse de déplacement de ladite télécommande, système dans lequel la différence de fréquences, obtenue en soustrayant la première fréquence de la deuxième fréquence, est négative quand la télécommande s'éloigne du premier détecteur mais se rapproche du deuxième détecteur, et la différence de fréquences, obtenue en soustrayant la première fréquence de la deuxième fréquence, est positive quand la télécommande s'éloigne du deuxième détecteur mais se rapproche du premier détecteur.

**4.** Système de commande à distance sans fil selon la revendication 1, dans lequel le module de décision (16) détermine le modèle de mouvement de la télécommande, basé sur un modèle de changement de la différence de fréquences entre deux des fréquences détectées sur la durée.

**5.** Système de commande à distance sans fil selon la revendication 4, dans lequel le module de décision (16) détermine le modèle de mouvement de la télécommande, basé sur le fait de savoir si la différence de fréquences suit un modèle périodique ou une combinaison de plusieurs modèles périodiques.

**6.** Système de commande à distance sans fil selon la revendication 1, dans lequel le signal de commande est différent quand il correspond à des conditions faisant que la télécommande se déplace de façon horizontale, verticale, oblique, circulaire, ou suivant un mouvement de va-et-vient.

**7.** Système de commande à distance sans fil selon la revendication 1, dans lequel le module de décision (16) détermine en outre et enregistre une trajectoire de mouvement de la télécommande, basée sur la différence de fréquences.

**8.** Système de commande à distance sans fil selon la revendication 7, dans lequel le module de décision (16) détermine une vitesse de déplacement et une direction de déplacement de la télécommande, basées sur la différence de fréquences, et détermine la trajectoire de mouvement selon la vitesse de déplacement et la direction de déplacement.

**9.** Système de commande à distance sans fil selon la revendication 1, dans lequel une modulation à accès multiples est réalisée sur le signal radioélectrique avant que le signal radioélectrique soit émis par la télécommande ; le module de décision (16) comprend une unité de démodulation pour démoduler le signal radioélectrique et détermine une information d'identification de la télécommande.

**10.** Système de commande à distance sans fil selon la revendication 9, dans lequel la modulation à accès multiples est une modulation à accès multiples par répartition dans le temps (TDMA), une modulation à accès multiples par répartition de code (CDMA) ou une modulation à accès multiples par répartition de fréquence (FDMA).

**11.** Système de commande à distance sans fil selon la revendication 1, dans lequel le module de décision (16) détermine le modèle de mouvement basé sur la différence de fréquences au moins au nombre de un, seulement quand au moins un résultat de détection parmi les résultats de détection est conforme à une limitation de fréquence prédéterminée.

**12.** Système de commande à distance sans fil selon la revendication 1, dans lequel la télécommande comprend une batterie et un circuit oscillant pour générer le signal radioélectrique.

**13.** Système de commande à distance sans fil selon la revendication 1, dans lequel chacun des détecteurs (14A-14D) comprend, respectivement, un circuit de décision de fréquence pour déterminer une fréquence du signal radioélectrique, basée sur le nombre de transitions du signal radioélectrique.

FIG. 1

FIG. 2(A)

FIG. 2(B)

| Move Pattern (Gesture) | ⟺ | ⇕ | ⬈ | ⬊ |
|---|---|---|---|---|
| $f_1 - f_2$ | Without periodicity | Periodicial+ Large amplitude | Periodicial+ Small amplitude | Periodicial+ Small amplitude |
| $f_1 - f_3$ | Periodicial+ Large amplitude | Without periodicity | Periodicial+ Small amplitude | Periodicial+ Small amplitude |
| $f_1 - f_4$ | Periodicial+ Small amplitude | Periodicial+ Small amplitude | Without periodicity | Periodicial+ Large amplitude |
| $f_2 - f_3$ | Periodicial+ Small amplitude | Periodicial+ Small amplitude | Periodicial+ Large amplitude | Without periodicity |
| $f_2 - f_4$ | Periodicial+ Large amplitude | Without periodicity | Periodicial+ Small amplitude | Periodicial+ Small amplitude |
| $f_3 - f_4$ | Without periodicity | Periodicial+ Large amplitude | Periodicial+ Small amplitude | Periodicial+ Small amplitude |
| Characteristic | With obvious periodicity at the horizontal direction | With obvious periodicity at the vertical direction | With obvious periodicity at the right oblique direction | With obvious periodicity at the left oblique direction |

FIG. 3(A)

| Move Pattern (Gesture) | (clockwise) | (counterclockwise) | (tap) |
|---|---|---|---|
| $f_1 - f_2$ | Periodicial+ Large amplitude | | Small amplitude |
| $f_1 - f_3$ | Periodicial+ Large amplitude | | Small amplitude |
| $f_1 - f_4$ | Periodicial+ Large amplitude | | Small amplitude |
| $f_2 - f_3$ | Periodicial+ Large amplitude | | Small amplitude |
| $f_2 - f_4$ | Periodicial+ Large amplitude | | Small amplitude |
| $f_3 - f_4$ | Periodicial+ Large amplitude | | Small amplitude |
| $f_1 + f_2 + f_3 + f_4$ | Small amplitude | | Periodicial+ Large amplitude |
| Characteristic | Periodical at every direction; when the gesture is clockwise the order of appearance of the maximum amplitudes at different directions is different from that when the gesture is counterclockwise | | $f_1$, $f_2$, $f_3$, and $f_4$ are all periodical |

## FIG. 3(B)

**EP 2 323 013 B1**

REFERENCES CITED IN THE DESCRIPTION

**Patent documents cited in the description**

- US 4578674 A
- US 4654648 A
- US 5999167 A
- US 20070115252 A
- GB 2408337 A
- GB 2388749 A
- US 6504526 B